(19) **Europäisches Patentamt / European Patent Office / Office européen des brevets**

(11) **EP 3 946 967 B1**

(12) **EUROPEAN PATENT SPECIFICATION**

(45) Date of publication and mention
of the grant of the patent:
**01.07.2026  Bulletin 2026/27**

(21) Application number: **20779460.3**

(22) Date of filing: **18.03.2020**

(51) International Patent Classification (IPC):
*B44C 5/04* (2006.01)    *B44C 1/16* (2006.01)
*B44C 1/18* (2006.01)    *B41M 5/00* (2006.01)
*B41M 7/00* (2006.01)    *C08J 7/046* (2020.01)
*C08J 7/04* (2020.01)    *C08F 290/06* (2006.01)
*C09D 11/30* (2014.01)    *C09D 4/06* (2006.01)
*B44C 1/10* (2006.01)    *C09D 4/00* (2006.01)
*C09D 11/101* (2014.01)    *C08F 220/18* (2006.01)
*C08F 220/28* (2006.01)

(52) Cooperative Patent Classification (CPC):
(C-Sets available)
**B44C 1/105; C08J 7/0427; C08J 7/046; C09D 4/00;
C09D 11/101; C09D 11/30;** B41M 7/0045;
C08F 220/1809; C08F 220/282; C08J 2327/06;
C08J 2475/14                                  (Cont.)

(86) International application number:
**PCT/IB2020/052485**

(87) International publication number:
**WO 2020/194136 (01.10.2020 Gazette 2020/40)**

(54) **DECORATIVE FILM AND RADIATION CURABLE INKJET INK**

DEKORFOLIE UND STRAHLUNGSHÄRTBARE TINTENSTRAHLDRUCKTINTE

FILM DÉCORATIF ET ENCRE POUR JET D'ENCRE DURCISSABLE PAR RAYONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2019  JP 2019057174**

(43) Date of publication of application:
**09.02.2022  Bulletin 2022/06**

(73) Proprietor: **3M Innovative Properties Company
Saint Paul, Minnesota 55133-3427 (US)**

(72) Inventors:
• **ONO, Katsuya
Tokyo 141--8684 (JP)**
• **SUGIYAMA, Naota
Tokyo 141--8684 (JP)**

(74) Representative: **Vossius & Partner
Patentanwälte Rechtsanwälte mbB
Siebertstraße 4
81675 München (DE)**

(56) References cited:
EP-A1- 3 053 739       WO-A2-2013/154695
CN-U- 203 022 281      US-A1- 2006 003 149
US-A1- 2008 176 039    US-A1- 2013 222 499
US-A1- 2015 017 398

(52) Cooperative Patent Classification (CPC): (Cont.)

C-Sets
**C09D 4/00, C08F 220/1809;**
**C09D 4/00, C08F 220/282;**
C08F 220/1809, C08F 222/1065, C08F 220/282;

C08F 220/282, C08F 220/282, C08F 222/1065;
C08F 220/282, C08F 222/1065;
C08F 220/282, C08F 222/1065, C08F 220/282;
C08F 220/282, C08F 222/1065, C08F 220/282,
C08F 220/1809

## Description

Technical Field

The present disclosure relates to a decorative film, particularly a decorative film having a texture, and a radiation curable inkjet ink usable in production of such a decorative film.

Background Art

A decorative film is used to decorate inner and exterior walls of buildings. In recent years, architecture and construction industries increasingly demand an interior material exhibiting the real feel of a substance. Examples of a method for making a pattern such as woodgrain or stone closer to a real pattern include a method for making such convexities and concavities that correspond to a material for the pattern on a surface of an interior material by surface finishing such as embossing, that is, a method for making a large difference in height (asperity) on a surface of an interior material. A design required for a decorative film is diversified. A decorative film having a three-dimensional uneven design on a surface so as to correspond to a decorative design is required.

Patent Document 1 (JP 2014-100811 A) describes "a laminate comprising a substrate and a surface pattern layer formed by printing a pattern with a transparent ink on the substrate".

Patent Document 2 (JP 2008-080650 A) describes "a decorative sheet comprising a gloriously colored layer, a pattern layer, a transparent adhesive layer, a transparent resin layer, and a clearly transparent protective layer in order on a substrate sheet, wherein at least the gloriously colored layer has an uneven pattern formed by embossing finishing".

Patent Document 3 (JP 2007-253506 A) describes "a decorative sheet comprising a pattern printed layer on both faces of a resin sheet, wherein the registering precision of pattern on both the faces in a width direction and a longitudinal direction of the sheet has an accuracy of 0.08 mm or less".

Patent Document 4 (JP 2005-067175 A) describes "a method for producing a three-dimensional decorative material to which a spuriously three-dimensional effect of an uneven surface in a shredded state is imparted, the method comprising (A) separately preparing a plane pattern which expresses an appearance pattern on a plane, and an uneven shaded pattern which spuriously expresses an uneven appearance having an uneven surface in a shredded state according to gradation, (B) overlapping images of the plane pattern and the uneven shaded pattern, resulting in synthesis, to produce a synthesized uneven pattern which expresses a spuriously three-dimensional effect so that the plane pattern has an appearance pattern on the uneven surface, and (C) forming the synthesized uneven pattern on an even surface which is formed by the uneven surface on a substrate".

US 2013/222499 A1 discloses gloss-controllable, radiation-curable inkjet inks which cure quickly with minimal radiation exposure, enabling high-printing speed and low surface heating with controllable gloss on the printed image. Ink gloss can be controlled by varying the pinning energy to create the printed images with varied gloss.

EP 3 053 739 A1 discloses a decorative sheet having high moldability and scratch resistance, and a high three-dimensional feeling when molded into a decorative resin molded article. The decorative sheet includes at least a base material layer, a first protective layer, and a second protective layer provided on a part of the first protective layer in this order, wherein the first protective layer is formed of an ionizing radiation curable resin composition containing a polyfunctional polycarbonate (meth)acrylate.

Summary of Invention

Technical Problem

When convexities and concavities are formed on a surface of an interior material by a surface finishing technology such as embossing, it is necessary that a material constituting the interior material, for example, a polymer film have a thickness which is sufficiently larger than a difference in height of the convexities and concavities. When the thickness of the polymer film is increased to a certain degree, the polymer film is rigid. This may cause problems in which the interior material is difficult to be handled during production, transport, and application, and the interior material does not sufficiently follow a curved face or a corner portion of an adherend. Therefore, a difference in height of the convexities and concavities which can be formed by embossing finishing is insufficient to impart the feel of a substance to a decorative film or make an appearance of a three-dimensional design so as to correspond to a pattern of the decorative film.

The interior material is often provided so as to cover the curved face and corner portion of a structure. Therefore, it is necessary that the interior material have flexibility, for example, elongation properties and bending properties. In winter, the temperature may be as low as 10°C even indoor. In this case, it is desirable that the interior material have low-temperature impact resistance to prevent damage during application and use. Further, it is desirable that the interior material have good chemical resistance to chemicals such as a detergent and an alcohol which are used for daily cleaning.

The present disclosure provides a decorative film having a texture with the feel of a substance or three-dimensional convexities and concavities which correspond to designs of various decorative films on a surface, and excellent flexibility, low-temperature impact resistance, and chemical resistance. The present disclosure also provides a radiation curable inkjet ink usable in production of such a decorative film.

Solution to Problem

The subject-matter of the present invention is defined by the features of the independent claims. Further embodiments of the invention are defined in the dependent claims.

One embodiment of the present disclosure provides a decorative film including a base film layer, a printed layer disposed on the base film layer, and a protective layer disposed on the printed layer and having a texture, wherein the protective layer contains a cured product of a radiation curable inkjet ink which is obtained by inkjet printing, the impact resistance of the decorative film at 10°C is greater than or equal to 4.52 Nm (40 in·lbs), and cracking does not occur in a bending resistance test in accordance with JIS K 5600-5-1:1999.

Another embodiment of the present disclosure provides a radiation curable inkjet ink including greater than or equal to 20 parts by mass of bifunctional urethane (meth)acrylate oligomer, and from 10 to 80 parts by mass of monofunctional monomer having a dioxane or dioxolane moiety, relative to 100 parts by mass of polymerizable component, wherein the glass transition temperature of the cured product of the radiation curable inkjet ink is from 0 to 30°C.

Advantageous Effects of Invention

The decorative film of the present disclosure has a texture with the feel of a substance which is imparted by a protective layer formed by inkjet printing of the radiation curable inkjet ink, or three-dimensional convexities and concavities corresponding to the design of the decorative film on a surface, and excellent flexibility, low-temperature impact resistance, and chemical resistance. Therefore, the decorative film can be suitably used in application to an interior material of a building or the like.

Note that the above descriptions should not be construed to be a disclosure of all of the embodiments and benefits of the present disclosure.

Brief Description of Drawings

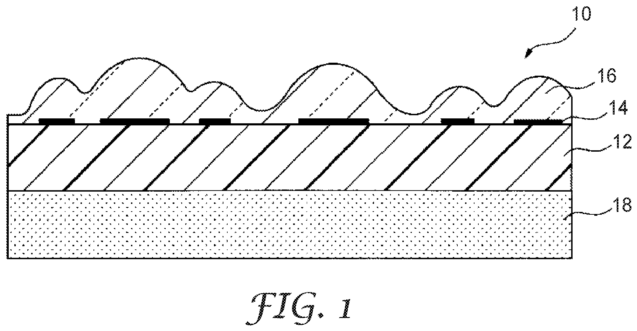

FIG. 1 is a schematic cross-sectional view of a decorative film of one embodiment.

Description of Embodiments

Hereinafter, representative embodiments of the present invention will be described in more detail for the purpose of illustration, but the present invention is not limited to these embodiments.

In the present disclosure, a "monofunctional monomer" means a compound having only one reactive functional group, and generally has a molecular weight of less than 1000.

In the present disclosure, an "oligomer" means a compound having a plurality of units derived from monomers, and typically has a molecular weight of greater than or equal to approximately 500, or greater than or equal to approximately 1000. For example, an urethane (meth)acrylate oligomer is a compound including a plurality of units having an urethane bond, and having a (meth)acryloyloxy group.

In the present disclosure, a "texture" means a three-dimensional shape which can be sensed through visual sense or auditory sense by an observer, on a surface.

In the present disclosure, "transparent" means that the total light transmittance of a material or an article at a wavelength range from 400 to 700 nm is greater than or equal to approximately 70%, or greater than or equal to approximately 90%. The total light transmittance can be determined in accordance with JIS K 7361-1:1997 (ISO 13468-1:1996).

In the present disclosure, "(meth)acrylic" means acrylic or methacrylic, "(meth)acryloyl" means acryloyl or methacryloyl, and "(meth)acrylate" means acrylate or methacrylate.

A decorative film of the present disclosure includes a base film layer, a printed layer disposed on the base film layer, and a protective layer disposed on the printed layer and having a texture. In the present disclosure, "disposed on" includes not only directly disposed on, but also indirectly disposed on. For example, one or more other layers may be provided between the printed layer and the protective layer. The layers disposed on the base film layer may be partially disposed.

The protective layer contains a cured product of a radiation curable inkjet ink which is formed by inkjet printing.

In one embodiment, the radiation curable inkjet ink contains a bifunctional urethane (meth)acrylate oligomer and a monofunctional monomer having a dioxane or dioxolane moiety. In this embodiment, the flexibility, low-temperature impact resistance, and chemical resistance of the decorative film can be particularly improved.

In one embodiment, the impact resistance (low-temperature impact resistance) of the decorative film at 10°C is greater than or equal to 40 in·lbs (approximately 4.52 Nm), and the decorative film is not cracked in a bending resistance test in accordance with JIS K 5600-5-1:1999. In this embodiment, the component and composition of the radiation curable inkjet ink used in formation of the protective layer is determined so that the decorative film has such impact resistance and bending resistance. The thickness of the protective layer, the material and thickness of the base film layer, and the like may also contribute to the impact resistance and bending resistance of the decorative film. In consideration of this contribution, the component and composition of the radiation curable inkjet ink may be determined.

The impact resistance of the decorative film at 10°C is preferably greater than or equal to approximately 5.65 Nm (approximately 50 in·lbs), and more preferably greater than or equal to approximately 6.78 Nm (approximately 60 in·lbs). The impact resistance of the decorative film at 5°C is preferably greater than or equal to approximately 3.39 Nm (approximately30 in·lbs ), and more preferably greater than or equal to approximately 4.52 Nm (approximately40 in·lbs ). In some embodiments, the impact resistance of the decorative film at 5°C or 10°C is less than or equal to approximately 22.6 Nm (approximately200 in·lbs ), less than or equal to approximately 17.0 Nm (approximately 150 in·lbs ), or less than or equal to approximately 11.3 Nm (approximately 100 in·lbs ). Impact resistance is determined as follows. The decorative film is cut into a length of 150 mm and a width of 70 mm, bonded to an aluminum plate having a length of 150 mm, a width of 70 mm, and a thickness of 1 mm at 25°C, left at a temperature of 5°C or 10°C for 24 hours, and then set in an impact resistance test device. A 2-pound weight is dropped onto a surface of the decorative film at a temperature of 5°C or 10°C while the height is changed from 5 inches to 40 inches. The appearance of the decorative film is observed. The impact resistance is determined as a moment (in·lbs) when cracking occurs.

Specifically, a bending resistance test of the decorative film is performed as follows. The decorative film is cut into a length of 50 mm and a width of 25 mm, bonded to an aluminum plate having a length of 150 mm, a width of 30 mm, and a thickness of 1 mm at 25°C, and left at 25°C for 24 hours. The aluminum plate to which the decorative film is bonded is bent around a mandrel having a diameter of 5 mm at 180° by a coating film bending tester in accordance with JIS K 5600-5-1:1999. The presence or absence of cracking at the bent portion of the decorative film is visually observed.

FIG. 1 is a schematic cross-sectional view of a decorative film of one embodiment of the present disclosure. A decorative film 10 includes a base film layer 12, a printed layer 14 disposed on the base film layer 12, and a protective layer 16 disposed on the printed layer 14. The protective layer 16 contains a cured product of a radiation curable inkjet ink which is formed by inkjet printing, and a texture is imparted to the decorative film using a three-dimensional shape of the protective layer 16. FIG. 1 illustrates that the printed layer 14 is completely covered with the protective layer 16, but a part of the printed layer 14 may be exposed to the outside. The printed layer 14 and the protective layer 16 may be each continuous or discontinuous.

As a base film layer, a film containing a variety of resins such as a polymethyl methacrylate (PMMA)-containing acrylic resin, polyurethane (PU), polyvinyl chloride (PVC), polycarbonate (PC), polyolefin such as polyethylene (PE) or polypropylene (PP), polyester such as polyethylene terephthalate (PET) or polyethylene naphthalate, a fluororesin, a copolymer such as an ethylene-vinyl acetate copolymer (EVA), an ethylene-acrylic acid copolymer, an ethylene-ethyl acrylate copolymer, an ethylene-vinyl acetate copolymer, an acrylonitrile-butadiene rubber (NBR), or an acrylonitrile-butadiene-styrene copolymer (ABS), or a mixture thereof can be used.

From the viewpoint of strength, impact resistance, and the like, a film containing polyurethane, polyvinyl chloride, polyethylene terephthalate, an acrylonitrile-butadiene-styrene copolymer, or polycarbonate can be advantageously used as the base film layer. The base film layer can function as a receptor layer of a printing ink and/or as a protective layer for protecting a surface of an adherend against puncture, impact, and the like from the outside. When the base film layer functions as a receptor layer of a printing ink, the base film layer which is a polyvinyl chloride film or a polyurethane film is advantageous in terms of printing aptitude, solvent resistance (e.g., alcohol resistance), and the like. In terms of flame retardancy, pliability, and the like, a polyvinyl chloride film can be advantageously used as the base film layer.

The base film layer may have a variety of thicknesses. From the viewpoint of strength and ease of handling of the decorative film, the thickness of the base film may be generally greater than or equal to approximately 10 μm, greater than or equal to approximately 20 μm, or greater than or equal to approximately 50 μm, and less than or equal to approximately 500 μm, less than or equal to approximately 200 μm, or less than or equal to approximately 100 μm. The thickness of the base film layer when the base film layer is not flat means the thickness of the thinnest portion of the base film layer. For example, the base film layer may be embossed. The depth of embossing may be generally less than the thickness of the base film layer, and may be greater than or equal to approximately 1 μm, greater than or equal to approximately 2 μm, or greater than or equal to approximately 5 μm, and less than or equal to approximately 50 μm, less than or equal to approximately 20 μm, or less than or equal to approximately 10 μm.

The base film layer may be transparent, semi-transparent, or opaque, and may be colorless or colored. In one embodiment, the base film layer is colored white. This embodiment is advantageous in terms of sharpness, color development, and the like of an image created by a printed layer disposed directly or indirectly on the base film layer.

The printed layer is used to impart decorativeness or design properties to the decorative film with a design, a pattern, or the like. The printed layer can be formed by printing with a colorant such as a toner or an ink on the base film layer without or through another layer. When the base film layer is transparent or semi-transparent, the printed layer can be also formed between the base film layer and an adhesive layer. The printed layer may be formed using a printing technique such as gravure printing, electrostatic printing, screen printing, inkjet printing, or offset printing. A solvent-based ink or an UV-curable ink can be used as a printing ink.

In one embodiment, the printed layer is an inkjet printed layer. In another embodiment, the printed layer is formed by inkjet printing with the UV-curable ink. Inkjet printing, particularly inkjet printing with the UV curable ink allows for on-demand production in a short delivery.

The printed layer may have a variety of thicknesses. When the solvent-based ink is generally used, the thickness thereof may be greater than or equal to approximately 1 $\mu$m, or greater than or equal to approximately 2 $\mu$m, and less than or equal to approximately 10 $\mu$m, or less than or equal to approximately 5 $\mu$m. When the UV-curable ink is used, the thickness thereof may be greater than or equal to approximately 1 $\mu$m, or greater than or equal to approximately 5 $\mu$m, and less than or equal to approximately 50 $\mu$m, or less than or equal to approximately 30 $\mu$m.

The printed layer may be continuous or discontinuous. The printed layer may be disposed so as to correspond to the entire surface of the decorative film, or may be disposed so as to correspond to a portion or a plurality of portions of the decorative film.

The protective layer containing the cured product of the radiation curable inkjet ink is disposed over the printed layer and has a texture formed by inkjet printing the radiation curable inkjet ink. In general, the texture of the protective layer is visually or tactilely sensed by an observer since the protective layer has a three-dimensional shape.

It is advantageous that the radiation curable inkjet ink is a solvent-free ink from the viewpoint of environmental load, workability, and curability. An aqueous ink or a solvent-based ink can be used as the radiation curable inkjet ink.

The radiation curable inkjet ink may be transparent, semi-transparent, or opaque, and may be colorless or colored. The whole protective layer may be formed from a transparent or semi-transparent radiation curable inkjet ink, or a portion of the protective layer may be formed from a transparent or semi-transparent radiation curable inkjet ink, and the rest of the protective layer may be formed from an opaque radiation curable inkjet ink. In one embodiment, when the radiation curable inkjet ink is transparent and a cured product having a thickness of 50 $\mu$m is formed, the total light transmittance at a wavelength range of 400 to 700 nm of the cured product is greater than or equal to approximately 70%, or greater than or equal to approximately 90%.

In one embodiment, the radiation curable inkjet ink is a radically polymerizable acrylic ink. The protective layer formed from the acrylic ink has excellent transparency, strength, weather resistance, and the like, and is advantageous in using as an interior material.

In one embodiment, the radiation curable inkjet ink contains a bifunctional urethane (meth)acrylate oligomer and a monofunctional monomer having a dioxane or dioxolane moiety. The radiation curable inkjet ink may contain another polymerizable monomer or polymerizable oligomer, a photopolymerization initiator, and an additive such as a light stabilizer, a polymerization inhibitor, an UV absorbent, a defoamer, an anti-smudge agent, a surface conditioner, and a filler, as necessary.

The bifunctional urethane (meth)acrylate oligomer has a (meth)acryloyl group introduced into both terminals of an urethane oligomer which is a reaction product of a diol with a diisocyanate. The (meth)acryloyl group is reacted with a (meth)acryloyl group of another bifunctional urethane (meth)acrylate oligomer or a monofunctional monomer to form a cured product. The bifunctional urethane (meth)acrylate oligomer can impart flexibility, low temperature impact resistance, and chemical resistance to the cured product of the radiation curable inkjet ink. The bifunctional urethane (meth)acrylate oligomer may be one type or a combination of two or more types. All the diol and the diisocyanate constituting the urethane oligomer can be one type or a combination of two or more types.

Examples of the diol include polyether polyol, polyether polyol, polycarbonate polyol, and polycaprolactone polyol.

The diol include a low molecular weight diol. Examples of the low molecular weight diol include ethylene glycol, diethylene glycol, propylene glycol, dipropylene glycol, 1,3-butanediol, 1,4-butanediol, 2-methyl-1,3-propanediol, 1,5-pentanediol, 1,6-hexanediol, neopentyl glycol, 1,4-cyclohexanedimethanol, bisphenol A, bisphenol F, hydrogenated bisphenol A, hydrogenated bisphenol F, 1,2-cyclopentanediol, and tricyclo[5.2.1.0$^{2,6}$]decanedimethanol.

Examples of diisocyanate include aliphatic isocyanate and aromatic isocyanate. Examples of the aliphatic diisocyanate include tetramethylene diisocyanate, hexamethylene diisocyanate, 2,4,4-trimethylhexmethylene diisocyanate, 2,2,4-trimethylhexamethylene diisocyanate, decamethylene diisocyanate, 1,3-cyclohexane diisocyanate, 1,4-cyclohexane diisocyanate, isophorone diisocyanate, and 4,4'-methylene bis(cyclohexyl isocyanate). Examples of the aromatic isocyanate include 2,4,-toluene diisocyanate, 2,6-toluene diisocyanate, methylenediphenyl 4,4'-diisocyanate, 1,3-phenylene diisocyanate, 1,4-phenylene diisocyanate, 3,3'-dimethyldiphenylmethane-4,4'-diisocyanate, diphenylmethane-2,2'-diisocyanate, diphenylmethane-2,4'-diisocyanate, 4,4'-diisocyanato-3,3'-dimethylbiphenyl, 1,5-naphthalene diisocyanate, and 2-methyl-1,5-naphthalene diisocyanate.

When both the diol and the diisocyanate are an aliphatic compound, the weather resistance of the cured product of the radiation curable inkjet ink and the protective layer containing the cured product can be enhanced.

The (meth)acryloyl group can be introduced by a reaction of a hydroxyl group-containing (meth)acrylate with an isocyanato terminal of the urethane oligomer. Examples of the hydroxyl group-containing (meth)acrylate include 2-hydroxyethyl acrylate, 2-hydroxyethyl methacrylate, 2-hydroxypropyl acrylate, 2-hydroxypropyl methacrylate, 2-hydroxybutyl acrylate, 2-hydroxybutyl methacrylate, dipropylene glycol monoacrylate, and dipropylene glycol monomethacrylate. The hydroxyl group-containing (meth)acrylate may be used alone or two or more types thereof may be used in combination. In this embodiment, it is desirable that the diisocyanate be used in an excess amount relative to the amount of the diol, that is, the molar ratio of the NCO group to the OH group be greater than 1 during synthesis of the urethane oligomer.

The (meth)acryloyl group can be introduced by a reaction of an isocyanato group-containing (meth)acrylate with a hydroxyl group terminal of the urethane oligomer. Examples of the isocyanato group-containing (meth)acrylate include 2-isocyanatoethyl acrylate and 2-isocyanatoethyl methacrylate. In this embodiment, it is desirable that the diol be used in an excess amount relative to the amount of the diisocyanate, that is, the molar ratio of the NCO group to the OH group be less than 1 during synthesis of the urethane oligomer.

Examples of the bifunctional urethane (meth)acrylate oligomer include a polyester urethane di(meth)acrylate oligomer, a polycarbonate urethane di(meth)acrylate oligomer, and a polyether urethane di(meth)acrylate oligomer.

The bifunctional urethane (meth)acrylate oligomer is advantageously a bifunctional aliphatic urethane acrylate oligomer. From the bifunctional aliphatic urethane acrylate oligomer, a cured product having excellent weather resistance and a protective layer containing such a cured product can be provided.

The number average molecular weight Mn of the bifunctional urethane (meth)acrylate oligomer is generally greater than or equal to approximately 500, greater than or equal to approximately 1000, or greater than or equal to approximately 1200, and less than or equal to approximately 5000, less than or equal to approximately 4000, or less than or equal to approximately 3000. The weight average molecular weight Mw of the bifunctional urethane (meth)acrylate oligomer is generally greater than or equal to approximately 500, greater than or equal to approximately 1000, or greater than or equal to approximately 1200, and less than or equal to approximately 5000, less than or equal to approximately 4000, or less than or equal to approximately 3000. The number average molecular weight Mn and the weight average molecular weight Mw are values determined by gel permeation chromatography in terms of polystyrene.

It is desirable that the radiation curable inkjet ink contain the bifunctional urethane (meth)acrylate oligomer in an amount of greater than or equal to approximately 20 parts by mass, greater than or equal to approximately 25 parts by mass, or greater than or equal to approximately 30 parts by mass, relative to 100 parts by mass of a polymerizable component. When the content of the bifunctional urethane (meth)acrylate oligomer relative to 100 parts by mass of the polymerizable component is greater than or equal to approximately 20 parts by mass, the flexibility, low-temperature impact resistance, and chemical resistance of the cured product of the radiation curable inkjet ink can be enhanced. It is desirable that the radiation curable inkjet ink contain the bifunctional urethane (meth)acrylate oligomer in an amount of less than or equal to approximately 50 parts by mass, less than or equal to approximately 45 parts by mass, or less than or equal to approximately 40 parts by mass, relative to 100 parts by mass of the polymerizable component. When the content of the bifunctional urethane (meth)acrylate oligomer relative to 100 parts by mass of the polymerizable component is less than or equal to approximately 50 parts by mass, favorable inkjet discharge properties can be obtained. In the present disclosure, the "polymerizable component" includes the bifunctional urethane (meth)acrylate oligomer, the monofunctional monomer having a dioxane or dioxolane moiety, and another polymerizable monomer and another oligomer. The monofunctional monomer having a dioxane or dioxolane moiety is a compound having at least one of a dioxane moiety and a dioxolane moiety in the molecule, and only one reactive functional group. When the monofunctional monomer having a dioxane or dioxolane moiety is combined with the bifunctional urethane (meth)acrylate oligomer, the low-temperature impact resistance of the cured product and the protective layer containing the cured product can be enhanced. Examples of the reactive functional group include a (meth)acryloyl group, a (meth)acrylamide group, and a vinyl group. Since the reactivity with the bifunctional urethane (meth)acrylate oligomer is high, it is advantageous that the monofunctional monomer having a dioxane or dioxolane moiety has a (meth)acryloyl group, and particularly an acryloyl group. The monofunctional monomer having a dioxane or dioxolane moiety may be one type or a combination of two or more types.

Examples of the monofunctional monomer having a dioxane or dioxolane moiety include monofunctional monomers having a dioxane moiety such as (5-ethyl-1,3-dioxan-5-yl)methyl (meth)acrylate (also referred to as cyclic trimethylolpropane formal acrylate), (2-methyl-5-ethyl-1,3-dioxan-5-yl)methyl (meth)acrylate, (2,2-dimethyl-5-ethyl-1,3-dioxan-5-yl)methyl (meth)acrylate, (2-methyl-2,5-diethyl-1,3-dioxan-5-yl)methyl (meth)acrylate, (2,2,5-trimethyl-1,3-dioxan-5-yl)methyl (meth)acrylate, (2,5-diethyl-1,3-dioxan-5-yl)methyl (meth)acrylate, and polyethylene glycol (meth)acrylate having a 1,3-dioxane cycle, and monofunctional monomers having a dioxolane moiety such as (2-methyl-2-ethyl-1,3-dioxolan-4-yl)methyl (meth)acrylate, (2-cyclohexyl-1,3-dioxolan-4-yl)methyl (meth)acrylate, (2,2-dimethyl-1,3-dioxolan-4-yl)methyl (meth)acrylate, (2-methyl-2-isobutyl-1,3-dioxolan-4-yl)methyl (meth)acrylate, (2-methyl-2-acetonyl-1,3-dioxolan-4-yl)methyl (meth)acrylate, (2-oxo-1,3-dioxolan-4-yl)methyl (meth)acrylate, 2-(2-oxo-1,3-dioxolan-4-yl) ethyl (meth)acrylate, and 3-(2-oxo-1,3-dioxolan-4-yl)propyl (meth)acrylate.

The monofunctional monomer having a dioxane or dioxolane moiety is preferably (5-ethyl-1,3-dioxan-5-yl) methyl (meth)acrylate or (2-methyl-2-ethyl-1,3-dioxolan-4-yl)methyl (meth)acrylate, more preferably (5-ethyl-1,3-dioxan-5-yl)methyl acrylate or (2-methyl-2-ethyl-1,3-dioxolan-4-yl)methyl acrylate from the viewpoint of high reactivity with the bifunctional urethane (meth)acrylate oligomer, and further preferably (2-methyl-2-ethyl-1,3-dioxolan-4-yl)methyl acrylate from the viewpoint of obtaining a cured product having excellent low-temperature impact resistance.

It is preferable that the radiation curable inkjet ink contain the monofunctional monomer having a dioxane or dioxolane moiety in an amount of greater than or equal to approximately 10 parts by mass, greater than or equal to approximately 20 parts by mass, or greater than or equal to approximately 30 parts by mass, and less than or equal to approximately 80 parts by mass, less than or equal to approximately 70 parts by mass, or less than or equal to approximately 50 parts by mass, relative to 100 parts by mass of the polymerizable component. When the content of the monofunctional monomer having a dioxane or dioxolane moiety relative to 100 parts by mass of the polymerizable component is greater than or equal to approximately 10 parts by mass, favorable low-temperature impact resistance can be achieved. When the content of the monofunctional monomer having a dioxane or dioxolane moiety relative to 100 parts by mass of the polymerizable component is less than or equal to approximately 80 parts by mass, favorable weather resistance can be achieved.

The radiation curable inkjet ink may contain the other polymerizable monomer. Examples of the other polymerizable monomer include monofunctional monomers including linear alkyl (meth)acrylates such as methyl (meth) acrylate, ethyl (meth)acrylate, n-butyl (meth)acrylate, isoamyl (meth)acrylate, 2-ethylbutyl (meth)acrylate, n-hexyl (meth) acrylate, 2-ethylhexyl (meth)acrylate, isooctyl (meth)acrylate, isononyl (meth)acrylate, decyl (meth)acrylate, and dodecyl (meth)acrylate; alicyclic (meth)acrylates such as cyclohexyl (meth)acrylate and isobornyl (meth)acrylate; phenoxyalkyl (meth)acrylates such as phenoxyethyl (meth)acrylate; alkoxyalkyl (meth)acrylates such as methoxylpropyl (meth) acrylate, 2-methoxybutyl (meth)acrylate, and 2-(2-ethoxyethoxy)ethyl (meth)acrylate; cyclic ether-containing (meth) acrylates such as glycidyl (meth)acrylate and tetrahydrofurfuryl (meth)acrylate; hydroxyl group-containing (meth)acrylates such as 2-hydroxyethyl (meth)acrylate, 2-hydroxypropyl (meth)acrylate, and 4-hydroxybutyl (meth)acrylate; nitrogen-containing (meth)acryloyl compounds such as (meth)acrylamide and N,N-diethyl (meth)acrylamide; and (meth) acrylic acid. Examples of the other polymerizable monomer include monofunctional monomers including vinyl compounds such as vinyl acetate, vinyl propionate, styrene, and vinyltoluene; unsaturated nitriles such as acrylonitrile and methacrylonitrile; and unsaturated carboxylic acids such as crotonic acid, itaconic acid, fumaric acid, citraconic acid, and maleic acid.

The other polymerizable monomer may be a polyfunctional monomer. The polyfunctional monomer can function as a crosslinking agent, and enhance the strength and durability of the cured product. When crosslinking is performed using the polyfunctional monomer, adhesive properties to the base film layer of the cured product or the other layers of the decorative film may be enhanced.

As the polyfunctional monomer, for example, a bifunctional (meth)acrylate such as 1,4-butanediol di(meth) acrylate, 1,6-hexanediol di(meth)acrylate, ethyleneglycol di(meth)acrylate, cyclohexanedimethanol di(meth)acrylate, diethyleneglycol di(meth)acrylate, dipropyleneglycol di(meth)acrylate, or polyethyleneglycol di(meth)acrylate; a trifunctional (meth)acrylate such as glycerol tri(meth)acrylate, trimethylolpropane tri(meth)acrylate, or pentaerythritol tri(meth) acrylate; or a (meth)acrylate having four or more functional groups such as ditrimethylolpropane tetra(meth)acrylate, dipentaerythritol penta(meth)acrylate, or pentaerythritol tetra(meth)acrylate can be used.

It is advantageous that the other polymerizable monomer has a (meth)acryloyl group, and particularly an acryloyl group since a cured product having high reaction with the bifunctional urethane (meth)acrylate oligomer and the monofunctional monomer having a dioxane or dioxolane moiety and excellent adhesive properties to other materials such as the base film layer and the printed layer is formed.

In some embodiments, the radiation curable inkjet ink does not contain the other polymerizable monomer containing the monofunctional monomer and the polyfunctional monomer or contains the other polymerizable monomer in an amount of greater than approximately 0 part by mass, greater than or equal to approximately 10 parts by mass, or greater than or equal to approximately 20 parts by mass, and less than or equal to approximately 70 parts by mass, less than or equal to approximately 60 parts by mass, or less than or equal to approximately 50 parts by mass, relative to 100 parts by mass of the polymerizable component.

As another polymerizable oligomer other than the bifunctional urethane (meth)acrylate oligomer, for example, polyester (meth)acrylate, epoxy (meth)acrylate, or the like can be used. The polymerizable oligomer may be a monofunctional or polyfunctional oligomer.

In some embodiments, the radiation curable inkjet ink does not contain the polymerizable oligomer or contains the other polymerizable oligomer in an amount of greater than approximately 0 part by mass, greater than or equal to approximately 5 parts by mass, or greater than or equal to approximately 10 parts by mass, and less than or equal to approximately 50 parts by mass, less than or equal to approximately 40 parts by mass, or less than or equal to approximately 30 parts by mass, relative to 100 parts by mass of the polymerizable component.

In some embodiments, the total content of the other polyfunctional polymerizable monomer and the polyfunctional polymerizable oligomer in the radiation curable inkjet ink is less than or equal to approximately 10 parts by mass, less than or equal to approximately 5 parts by mass, or less than or equal to approximately 3 parts by mass, relative to 100 parts by mass of the polymerizable component. When the total content is less than or equal to approximately 10 parts by mass, the flexibility of the cured product can be enhanced.

As a photopolymerization initiator, for example, a publicly known compound which induces a radical polymerization reaction can be used. As the photopolymerization initiator, any of an intramolecular cleavage type photopolymerization initiator and a hydrogen-abstracting type photopolymerization initiator can be used. Examples thereof include 1-hydroxycyclohexyl phenyl ketone, 2,2-dimethoxy-2-phenylacetophenone, 2-methyl-1-[4-(methylthio)phenyl]-2-morpholinopropan-1-one, 2-hydroxy-2-methyl-1-phenylpropan-1-one, 2-benzyl-2-dimethylamino-1-(4-morpholinophenyl)-butan-1-one, 1-[4-(2-hydroxyethoxy)-phenyl]-2-hydroxy-2-methyl-1-propan-1-one, 2,4,6-trimethylbenzoyldiphenylphosphine oxide, 2,6-dimethylbenzoyldiphenylphosphine oxide, benzoyldiethoxyphosphine oxide, bis(2,6-dimethoxybenzoyl)-2,4,4-trimethylpentylphosphine oxide, benzoin alkyl ether (e.g., benzoin methyl ether, benzoin ethyl ether, benzoin isopropyl ether, benzoin isobutyl ether, and n-butyl benzoin ether), methylbenzoyl formate, 1-(4-isopropylphenyl)-2-hydroxy-2-methylpropan-1-one, 2-hydroxy-2-methyl-1-phenylpropan-1-one, p-tert-butyltrichloroacetophenone, p-tert-butyldichloroacetophenone, benzyl, acetophenone, a thioxanthone compound (2-chlorothioxanthone, 2-methylthioxanthone, 2,4-diethylthioxanthone, and 2,4-diisopropylthioxanthone), camphorquinone, 3-ketocoumarin, an anthraquinone compound (e.g., anthraquinone, 2-ethylanthraquinone, $\alpha$-chloroanthoraquinone, and 2-tert-butylanthoraquinone), acenaphthene, 4,4'-dimethoxybenzyl, and 4,4'-dichlorobenzyl. The photopolymerization initiator may be used alone or two or more types thereof may be used in combination.

In some embodiments, the radiation curable inkjet ink contains the photopolymerization initiator in an amount of greater than or equal to approximately 1 part by mass, or greater than or equal to approximately 2 parts by mass, and less than or equal to approximately 20 parts by mass, or less than or equal to approximately 15 parts by mass, relative to 100 parts by mass of the polymerizable component.

The radiation curable inkjet ink may contain, as any component, an additive such as a light stabilizer, a polymerization inhibitor, an UV absorbent, a defoamer, an anti-smudge agent, a surface conditioner, and a filler.

The viscosity of the radiation curable inkjet ink at 25°C may be greater than or equal to approximately 5 mPa·s, or greater than or equal to approximately 15 mPa·s, and less than or equal to approximately 60 mPa·s, or less than or equal to approximately 50 mPa·s. When the viscosity of the radiation curable inkjet ink at 25°C falls within the aforementioned range, the shape of ink droplet during attachment of the ink droplet can be maintained, to efficiently form a protective layer having a three-dimensional shape.

The viscosity of the radiation curable inkjet ink at 60°C may be greater than or equal to approximately 1 mPa·s, or greater than or equal to approximately 3 mPa·s, and less than or equal to approximately 14 mPa·s, or less than or equal to approximately 12 mPa·s. When the viscosity of the radiation curable inkjet ink at 60°C falls within the aforementioned range, the ink flowability during injection of the ink droplet can be ensured, to enhance the printing aptitude of the radiation curable inkjet ink.

In some embodiments, the glass transition temperature (Tg) of the cured product of the radiation curable inkjet ink is higher than or equal to approximately 0°C, or higher than or equal to approximately 5°C, and lower than or equal to approximately 30°C, or lower than or equal to approximately 25°C. When the glass transition temperature of the cured product is higher than or equal to approximately 0°C, stickiness (tacky feel) of the cured product can be decreased. For example, such a cured product having decreased stickiness is suitable for the protective layer of the decorative film. When the glass transition temperature of the cured product is lower than or equal to approximately 30°C, excellent flexibility and low-temperature impact resistance can be imparted to the decorative film containing such a cured product. When the cured product is formed from a copolymer of n types of monomers, the glass transition temperature (Tg) of the cured product can be determined as a calculated glass transition temperature by the following FOX equation (Fox, T.G., Bull. Am. Phys. Soc., 1 (1956), p. 123):

[Equation 1]

$$\frac{1}{Tg + 273.15} = \sum_{i=1}^{n}\left(\frac{X_i}{Tg_i + 273.15}\right)$$

In the equation, $Tg_i$ is the glass transition temperature (°C) of homopolymer of a component i, $X_i$ is the mass fraction of the monomer of the component i added during polymerization, and i is a natural number of 1 to n.

[Equation 2]

$$\sum_{i=1}^{n} X_i = 1$$

When inkjet printing with the radiation curable inkjet ink is performed on the base film layer without or through another layer and the radiation curable inkjet ink is irradiated with radiation such as ultraviolet light or an electron beam, resulting in curing, the protective layer having a texture can be formed. Printing with the radiation curable inkjet ink may be performed on at least a portion of the printed layer or on the whole printed layer. Printing with the radiation curable inkjet ink may be repeatedly performed a plurality of times locally or wholly to increase the thickness of the protective layer.

The protective layer may have a variety of thicknesses. In some embodiments, the thickness of the protective layer may be at least partially greater than or equal to approximately 7 $\mu$m, greater than or equal to approximately 20 $\mu$m, or greater than or equal to approximately 30 $\mu$m. When the protective layer has a portion having a thickness of greater than or equal to approximately 7 $\mu$m, a texture with the real feel of a substance or three-dimensionally convexities and concavities which correspond to designs of the decorative film can be imparted to a surface of the decorative film.

In some embodiments, the largest thickness of the protective layer is less than or equal to approximately 500 $\mu$m, less than or equal to approximately 300 $\mu$m, or less than or equal to approximately 100 $\mu$m. When the largest thickness of the protective layer is less than or equal to approximately 500 $\mu$m, the flexibility, for example, elongation properties and bending properties of the protective layer can be made suitable.

In some embodiments, the largest height roughness Rz of the protective layer is greater than or equal to approximately 0.5 $\mu$m, greater than or equal to approximately 1 $\mu$m, or greater than or equal to approximately 1.5 $\mu$m, and less than or equal to approximately 20 $\mu$m, less than or equal to approximately 15 $\mu$m, or less than or equal to approximately 10 $\mu$m. When the largest height roughness Rz of the protective layer falls within the aforementioned range, a texture with the real feel of a substance or three-dimensionally convexities and concavities which correspond to designs of the decorative film can be imparted to the surface of the decorative film.

The protective layer may be transparent or semi-transparent. It is preferable that the protective layer be transparent. In some embodiments, the total light transmittance of the protective layer is greater than or equal to approximately 90%, greater than or equal to approximately 92%, or greater than or equal to approximately 95%, and the haze is less than or equal to approximately 2%, less than or equal to approximately 1.5%, or less than or equal to approximately 1.0%. When the total light transmittance and haze fall within the aforementioned ranges, an image provided by the printed layer of the decorative film can be made more sharp. The haze is determined according to JIS K 7136:2000 (ISO 14782:1999).

The decorative film may further include an adhesive layer disposed on the base film layer on a side opposite to the printed layer. FIG. 1 illustrates an adhesive layer 18 disposed on the base film layer 12 on a side opposite to the printed layer 14. In general, the adhesive layer can be formed using a solvent-type, emulsion-type, pressure-sensitive-type, heat-sensitive-type, heat-curable, or ultraviolet-curable adhesive, including an acrylic, a polyolefin, a polyurethane, a polyester, a rubber, or the like.

The thickness of the adhesive layer may be generally greater than or equal to approximately 3 $\mu$m, greater than or equal to approximately 5 $\mu$m, or greater than or equal to approximately 10 $\mu$m, and less than or equal to approximately 100 $\mu$m, less than or equal to approximately 80 $\mu$m, or less than or equal to approximately 50 $\mu$m.

In one embodiment, the adhesive layer is a pressure-sensitive adhesive layer. In order to adjust the adhesion force of the pressure-sensitive adhesive layer, the pressure-sensitive adhesive layer may contain elastic microspheres including a polyester, a polystyrene, an acrylic resin, a polyurethane, or the like.

A liner may be disposed on a surface of the adhesive layer. Examples of the liner include papers such as kraft paper, polymers such as a polyethylene, a polypropylene, a polyester, and cellulose acetate, and a paper coated with the polymer. The liner may have a surface that has been subjected to a release treatment using a silicone, a fluorocarbon, or the like. The thickness of the liner is generally greater than or equal to approximately 5 $\mu$m, greater than or equal to approximately 15 $\mu$m, or greater than or equal to approximately 25 $\mu$m, and less than or equal to approximately 300 $\mu$m, less than or equal to approximately 200 $\mu$m, or less than or equal to approximately 150 $\mu$m.

The adhesive layer may have a microstructured surface having a communication path extending to an outer edge of the adhesive layer. When the decorative film is applied to an adherend, air bubbles disposed between the decorative film and the adherend can be discharged to the outside through the communication path of the microstructured surface. In this embodiment, the liner may have a raised-and-recessed structure corresponding to the microstructured surface of the adhesive layer on a release face thereof. The liner may be the same as or different from one used in forming the microstructured surface of the adhesive layer.

Another layer, for example, a decorative layer such as a metal layer, a receptor layer of printing ink, or the like may be layered on the base film layer. These layers may be bonded through a bonding layer. The decorative layer may be disposed so as to correspond to the entire surface of the decorative film, or so as to correspond to a portion or a plurality of portions of the decorative film.

The metal layer can be formed by depositing a metal such as indium, tin, or chromium onto the base film layer or the other layer of the decorative film through sputtering or the like. A metal mask or the like may be also used upon vapor deposition or sputtering, to form a pattern or design. The metal layer may have a variety of thicknesses. The thickness of the metal layer is generally greater than or equal to approximately 5 nm, greater than or equal to approximately 10 nm, or greater than or equal to approximately 20 nm, and less than or equal to approximately 10 $\mu$m, less than or equal to approximately 5 $\mu$m, or less than or equal to approximately 2 $\mu$m.

As the receptor layer of printing ink, various resin layers can be used. A resin constituting the receptor layer is not particularly limited. As the resin, an acrylic polymer, a polyolefin, polyvinyl acetal, a phenoxy resin, or the like can be used. The glass transition temperature of the resin forming the receptor layer can be generally higher than or equal to approximately 0°C and lower than or equal to approximately 100°C. When the glass transition temperature falls within the aforementioned range, an image provided by transcription of a toner or printing with an ink can be made more sharp without impairing the pliability of the whole decorative film. The thickness of the receptor may be generally greater than or equal to approximately 2 $\mu$m, greater than or equal to approximately 5 $\mu$m, or greater than or equal to approximately 10 $\mu$m, and less than or equal to approximately 50 $\mu$m, less than or equal to approximately 40 $\mu$m, or less than or equal to approximately 30 $\mu$m.

In general, the bonding layer which bonds layers constituting the decorative film contains a solvent-type, emulsion-type, pressure-sensitive-type, heat-sensitive-type, heat-curable, or ultraviolet-curable adhesive, including an acrylic, a polyolefin, a polyurethane, a polyester, rubber, or the like. The thickness of the bonding layer may be generally greater than or equal to approximately 1 $\mu$m, greater than or equal to approximately 2 $\mu$m, or greater than or equal to approximately 5 $\mu$m, and less than or equal to approximately 50 $\mu$m, less than or equal to approximately 40 $\mu$m, or less than or equal to approximately 30 $\mu$m.

In one embodiment, the printed layer has a two-dimensional design pattern, the protective layer has a three-dimensionally shaped pattern, and the two-dimensional design pattern is synchronized with the three-dimensionally shaped pattern. Since the two-dimensional design pattern of the printed layer is synchronized with the three-dimensionally shaped pattern of the protective layer, a texture can be further enhanced from both the visual and auditory viewpoints.

A decorative film in which the two-dimensional design pattern of the printed layer is synchronized with the three-dimensionally shaped pattern can be produced by a method including steps of: providing an image data of the printed layer; converting the image data of the printed layer to a gray scale, to produce a gray scale image data; inverting a tone of the gray scale image data to produce an image data of the protective layer; as necessary, adjusting a tone curve of the image data of the protective layer; forming a printed layer having the two-dimensional design pattern on the base film layer by inkjet printing with an UV curable CMYK ink on the basis of the image data of the printed layer; and forming the protective layer on the printed layer by inkjet printing with the radiation curable inkjet ink on the basis of the image data of the protective layer.

The step of forming the printed layer and the step of forming the protective layer may be successively performed. The step of forming the printed layer and the step of forming the protective layer may be performed in one device provided with a plurality of inkjet printing heads. In order to form a protective layer having a large difference in height of convexities and concavities on a surface by repeating the step of forming the protective layer, an inkjet printing device may be provided with a conveying device capable of reciprocating a printed matter (e.g., a film of the base film layer), or a plurality of inkjet printing heads of the protective layer.

The two-dimensional design pattern of the printed layer can be more precisely synchronized with the three-dimensionally shaped pattern of the protective layer by arranging an inkjet printing head for the printed layer and an inkjet printing head for the protective layer in series in the inkjet printing device, and successively forming the printed layer and the protective layer by printing on the basis of the image data of the printed layer and the image data of the protective layer, respectively, obtained by the aforementioned method.

The two-dimensional design pattern of the printed layer and the three-dimensionally shaped pattern of the protective layer may be repeated in one decorative film or a non-repetitive pattern. Not only the repetitive pattern but also the non-repetitive pattern can be easily formed by inkjet printing. In embossing finishing using an embossing roller, a three-dimensionally shaped pattern which is longer than the outer circumference of the embossing roller and is not repeated can be formed. In a case of the non-repetitive pattern, the degree of freedom in terms of designing can be enhanced, and a decorative film having a design of an article can be produced.

In one embodiment, the decorative film has an elongation at break of greater than or equal to approximately 80%, greater than or equal to approximately 100%, or greater than or equal to approximately 120% at 20°C. The elongation at break can be determined from Equation: (length of decorative film at break - length of decorative film before elongation)/(length of decorative film before elongation)$\times$100(%) by cutting a decorative film into a length of 150 mm and a width of 25 mm, and performing a tensile test using a tensile tester at a pinching distance of 50 mm, a tensile rate of 300 mm/minute, and 20°C.

The total thickness of the decorative film is generally greater than or equal to approximately 50 μm, greater than or equal to approximately 60 μm, or greater than or equal to approximately 70 μm, and less than or equal to approximately 700 μm, less than or equal to approximately 600 μm, or less than or equal to approximately 500 μm. The total thickness of the decorative film does not include the thickness of the liner.

The decorative film can be provided in various forms such as a single sheet, a roll, and a laminate of a plurality of decorative films. In one embodiment, the decorative film has a roll shape.

The decorative film can be adhered to a surface of various adherends, and for example, can be applied to concrete, glass, a painting sheet, a flooring material, a wall paper, a plasterboard, and the like. The adherend may be a part of a construction structure, such as a wall, a window, a floor, a ceiling, and a column.

Examples

In the following examples, specific embodiments of the present disclosure will be exemplified, but the present invention is not limited thereto. All "parts" and "percent" are based on mass unless otherwise specified.

Materials and reagents used in the Examples are shown in Table 1.

[Table 1]

Table 1

| Name or abbreviation | Description | Tg of homopolymer (°C) | Supplier |
|---|---|---|---|
| CN991 | Aliphatic polyester urethane acrylate oligomer | 27 | Sartomer (Pennsylvania, USA) |
| SR420NS | 3,3,5-trimethylcyclohexyl acrylate | 29 | Sartomer (Pennsylvania, USA) |
| PEA | Phenoxyethyl Acrylate | 2 | Osaka Organic Chemical Industry (Osaka City, Osaka Prefecture, Japan) |
| CTFA | Trade designation "Viscoat # 200" Cyclic trimethylolpropane formal acrylate | 27 | Osaka Organic Chemical Industry (Osaka City, Osaka Prefecture, Japan) |
| MEDOL-10 | (2-methyl-2-ethyl-1,3-dioxolan-4-yl)methyl acrylate | -10 | Osaka Organic Chemical Industry (Osaka City, Osaka Prefecture, Japan) |
| IBXA | Isobornyl acrylate | 88 | Osaka Organic Chemical Industry (Osaka City, Osaka Prefecture, Japan) |
| A-DCP | Tricyclodecane dimethanol diacrylate | 187 | Shin-Nakamura Chemical Co., Ltd. (Wakayama-shi, Wakayama Prefecture, Japan) |
| Omnirad (trade name) 184 | 1-Hydroxycyclohexyl phenyl ketone | - | IGM Resins B. V. (Waalwijk, Netherlands) |
| TEGO (trade name) Flow 425 | Surface conditioner Polyether siloxane copolymer | - | Evonik Industries AG (Essensen, Nordrhein-Westfalen, Germany) |

Preparation of Radiation Curable Inkjet Ink and Composition

Radiation curable inkjet inks of Examples 1 to 11 and radiation curable compositions of Comparative Examples 1 to 5 were prepared by the following procedure. A monomer, an oligomer, and a photopolymerization initiator shown in Table 2 are stirred with a mixer for 60 minutes to obtain a premix solution. To the premix solution, a surface conditioner was then added, and the mixture was stirred for 5 minutes to obtain a radiation curable inkjet ink or composition. Numerical values in Table 2 are a compounded amount (part by mass) of each component. The calculated glass transition temperature was determined from the FOX equation based on components and composition of the radiation curable inkjet ink or composition. The viscosity was measured with a rheometer under conditions including a temperature of 60°C, a 60-mm cone plate, and a rotation number of 150 rpm. The viscosities of the radiation curable inkjet inks of Examples 1 to 11 were not greater than 14 mPa·s at 60°C, and inkjet printing aptitude was achieved.

Production of Film Sample - Inkjet Printing

As a protective layer, printing with the radiation curable inkjet ink of Example 1 was performed on a 3M (trade name) Scotchcal (trade name) graphic film IJ180Cv3-10XR (polyvinyl chloride film, 3M Japan Limited, Shinagawa-ku, Tokyo, Japan) with an inkjet printer (Inkjet head KM1024iLMHB, 720×720 dpi, KONICA MINOLTA, INC., Chiyoda-ku, Tokyo, Japan). The protective layer was irradiated with ultraviolet light using a metal halide lamp (UVA: 1956 mW/cm$^2$, irradiation dose: 1095 mJ/cm$^2$), resulting in curing. As a result, a film sample was obtained. The thickness of the cured protective layer was approximately 50 μm.

Production of Film Sample - Coating

A 3M (trade name) Scotchcal (trade name) graphic film IJ180Cv3-10XR (polyvinyl chloride film, 3M Japan Limited, Shinagawa-ku, Tokyo, Japan) was coated with each of the radiation curable inkjet inks of Examples 1 to 11 and the radiation curable compositions of Comparative Examples 1 to 5 as the protective layer using a wire bar #20. The protective layer was irradiated with ultraviolet light using a fusion lamp (Hbulb) (UVA: 1000 mW/cm$^2$, irradiation dose: 600 mJ/cm$^2$), resulting in curing. As a result, a film sample was obtained.

The chemical resistance (alcohol resistance), elongation at break, low-temperature impact resistance, and bending following properties of the film sample were evaluated by the following procedure. The evaluation results are shown in Table 2.

Evaluation Method

1. Alcohol Resistance

A surface of the film sample was rubbed 10 times with a Kimtowel (trade name) containing isopropanol (IPA). After then, the presence or absence of change of gloss of the surface of the film sample was visually observed. A surface where the gloss is not changed is evaluated to be "good" and a surface where gloss i changed is evaluated to be "poor".

2. Elongation at break

The film sample was cut into a length of 150 mm and a width of 25 mm, and the elongation when the film was broken with a tensile tester (Tensilon universal testing machine, model: RTC-121-A, A&D Company, Limited, Toshima-ku, Tokyo, Japan) at a pinching distance of 50 mm, a tensile rate of 300 mm/minute, and 20°C was measured. The elongation at break was determined from Equation: (length of film sample at break - length of film sample before elongation)/(length of film sample before elongation) × 100(%).

3. Low-Temperature Impact Resistance

The film sample was cut into a length of 150 mm and a width of 70 mm, and adhered to an aluminum plate having a length of 150 mm, a width of 70 mm, and a thickness of 1 mm at 25°C. The film sample was left to stand at 5°C for 24 hours, and then set in an impact resistance test device (IM-IG-1120, The Paul N. Gardner Company, Inc., Pompano Beach, Florida, U.S.A.). While the height of a 2-pound weight was changed from 5 inches to 40 inches, the weight was dropped to a surface of the film surface at a temperature of 5°C or 10°C. The appearance of the film sample was observed, and the moment (Nm or in·lbs) during cracking was recorded.

4. Bending Following Properties

The film sample was cut into a length of 50 mm and a width of 25 mm, adhered to an aluminum plate (A5052) having a length of 150 mm, a width of 30 mm, and a thickness of 1 mm at 25°C, and left to stand at 25°C for 24 hours. After then, the aluminum plate to which the film sample was adhered was bent around a mandrel having a diameter of 5 mm at 180° with a coating film bending tester (PI-801, TESTER SANGYO CO,. LTD., Miyoshi-machi, Iruma-gun, Saitama, Japan) in accordance with JIS K 5600-5-1:1999, and the presence or absence of cracking at the bend portion of the film sample was visually observed. A bent portion where cracking does not occur is evaluated to be "good", and a bent portion where cracking occurs is evaluated to be "poor".

[Table 2-1]

Table 2

|  | Example 1-1 | Example 1-2 | Example 2 | Example 3 | Example 4 |
|---|---|---|---|---|---|
| CN991 | 30 | 30 | 25 | 25 | 25 |
| SR420NS | 50 | 50 | - | 20 | - |
| PEA | - | - | - | - | - |
| CTFA | - | - | 55 | 35 | 45 |
| MEDOL-10 | 20 | 20 | 20 | 20 | 30 |
| IBXA | - | - | - | - | - |
| A-DCP | - | - | - | - | - |
| Irgacure (trade name) 184 | 10 | 10 | 10 | 10 | 10 |
| TEGO (trade name) Flow 425 | 0.1 | 0.1 | 0.1 | 0.1 | 0.1 |
| Bifunctional urethane (meth)acrylate oligomer relative to 100 parts by mass of polymerizable copolymer (part by mass) | 30 | 30 | 25 | 25 | 25 |
| Monofunctional monomer having dioxane or dioxolane moiety relative to 100 parts by mass of polymerizable copolymer (part by mass) | 20 | 20 | 75 | 55 | 75 |
| Glass transition temperature (°C) | 20 | 20 | 19 | 19 | 15 |
| Viscosity (mPa·s, 60°C) | 9.4 | 9.4 | 13.4 | 10.8 | 10.0 |
| Application Method | Inkjet | Coating | Coating | Coating | Coating |
| Alcohol resistance | Good | Good | Good | Good | Good |
| Elongation at break (%) | 108 | 102 | 132 | 131 | 132 |
| Low-temperature impact resistance (Nm, 5°C) | 5.65 | 6.78 | 9.04 | 9.04 | 9.04 |
| Low-temperature impact resistance (Nm, 10°C) | 9.04 | 9.04 | 9.04 | 9.04 | 9.04 |
| Bending following properties (#5 mandrel) | Good | Good | Good | Good | Good |

[Table 2-2]

| (Continuation of Table 2) | | | | | |
|---|---|---|---|---|---|
|  | Example 5 | Example 6 | Example 7 | Example 8 | Example 9 |
| CN991 | 25 | 20 | 30 | 25 | 30 |
| SR420NS | - | - | - | - | 60 |
| PEA | - | - | - | - | - |
| CTFA | 35 | 60 | - | 32 | - |
| MEDOL-10 | 40 | 20 | 70 | 40 | 10 |
| IBXA | - | - | - | - | - |
| A-DCP | - | - | - | 3 | - |
| Irgacure (trade name) 184 | 10 | 10 | 10 | 10 | 10 |
| TEGO (trade name) Flow 425 | 0.1 | 0.1 | 0.1 | 0.1 | 0.1 |

(continued)

| (Continuation of Table 2) | | | | | |
|---|---|---|---|---|---|
| | Example 5 | Example 6 | Example 7 | Example 8 | Example 9 |
| Bifunctional urethane (meth)acrylate oligomer relative to 100 parts by mass of polymerizable copolymer (part by mass) | 25 | 20 | 30 | 25 | 30 |
| Monofunctional monomer having dioxane or dioxolane moiety relative to 100 parts by mass of polymerizable copolymer (part by mass) | 75 | 80 | 70 | 72 | 10 |
| Glass transition temperature (°C) | 11 | 19 | 0 | 14 | 24 |
| Viscosity (mPa·s, 60°C) | 9.1 | 9.5 | 12.0 | 11.7 | 9.4 |
| Application method | Coating | Coating | Coating | Coating | Coating |
| Alcohol resistance | Good | Good | Good | Good | Good |
| Elongation at break (%) | 126 | 142 | 106 | 109 | 109 |
| Low-temperature impact resistance (Nm, 5°C) | 9.04 | 4.52 | 9.04 | 9.04 | 2.26 |
| Low-temperature impact resistance (Nm, 10°C) | 9.04 | 4.52 | 9.04 | 9.04 | 9.04 |
| Bending following properties (#5 mandrel) | Good | Good | Good | Good | Good |

Table 2-3

| (Continuation of Table 2) | | |
|---|---|---|
| | Example 10 | Example 11 |
| CN991 | 25 | 30 |
| SR420NS | - | - |
| PEA | - | - |
| CTFA | 25 | 70 |
| MEDOL-10 | 40 | - |
| IBXA | - | - |
| A-DCP | 10 | - |
| Irgacure (trade name) 184 | 10 | 10 |
| TEGO (trade name) Flow 425 | 0.1 | 0.1 |
| Bifunctional urethane (meth)acrylate oligomer relative to 100 parts by mass of polymerizable copolymer (part by mass) | 25 | 30 |
| Monofunctional monomer having dioxane or dioxolane moiety relative to 100 parts by mass of polymerizable copolymer (part by mass) | 65 | 70 |
| Glass transition temperature (°C) | 21 | 27 |
| Viscosity (mPa·s, 60°C) | 13.0 | 18.4 |
| Application method | Coating | Coating |
| Alcohol resistance | Good | Good |
| Elongation at break (%) | 81 | 125 |
| Low-temperature impact resistance (Nm, 5°C) | 6.78 | 2.26 |
| Low-temperature impact resistance (Nm, 10°C) | 9.04 | 9.04 |
| Bending following properties (#5 mandrel) | Good | Good |

[Table 2-4]

| (Continuation of Table 2) | | | | | |
|---|---|---|---|---|---|
| | Comparative Example 1 | Comparative Example 2 | Comparative Example 3 | Comparative Example 4 | Comparative Example 5 |
| CN991 | 15 | 10 | 30 | 30 | 10 |
| SR420NS | - | - | - | 70 | - |
| PEA | - | - | - | - | - |
| CTFA | 65 | 70 | - | - | 20 |
| MEDOL-10 | 20 | 20 | 20 | - | 30 |
| IBXA | - | - | 50 | - | - |
| A-DCP | - | - | - | - | 40 |
| Irgacure (trade name) 184 | 10 | 10 | 10 | 10 | 10 |
| TEGO (trade name) Flow 425 | 0.1 | 0.1 | 0.1 | 0.1 | 0.1 |
| Bifunctional urethane (meth) acrylate oligomer relative to 100 parts by mass of polymerizable copolymer (part by mass) | 15 | 10 | 30 | 30 | 10 |
| Monofunctional monomer having dioxane or dioxolane moiety relative to 100 parts by mass of polymerizable copolymer (part by mass) | 85 | 90 | 20 | 0 | 50 |
| Glass transition temperature (°C) | 19 | 19 | 45 | 28 | 59 |
| Viscosity (mPa·s, 60°C) | 7.3 | 5.6 | 14.8 | 9.4 | 8.6 |
| Application method | Coating | Coating | Coating | Coating | Coating |
| Alcohol resistance | Poor | Poor | Good | Good | Good |
| Elongation at break (%) | 154 | 169 | 110 | 99 | 5 |
| Low-temperature impact resistance (Nm, 5°C) | 2.26 | 1.13 | 2.26 | 2.26 | <1.13 |
| Low-temperature impact resistance (Nm, 10°C) | 2.26 | 1.13 | 2.26 | 3.39 | 1.13 |
| Bending following properties (#5 mandrel) | Good | Good | Good | Good | Poor |

## Claims

1. A decorative film comprising:

a base film layer;
a printed layer disposed on the base film layer; and
a protective layer disposed on the printed layer and having a texture,
wherein the protective layer contains a cured product of a radiation curable inkjet ink that is formed by inkjet printing, said cured product having a glass transition temperature from 0 to 30°C as determined according to the method disclosed in the description;
the impact resistance of the decorative film at 10°C is greater than or equal to 4.52 Nm as determined according to the method disclosed in the description, and cracking does not occur in a bending resistance test in accordance with JIS K 5600-5-1:1999,
wherein the radiation curable inkjet ink contains a bifunctional urethane (meth)acrylate oligomer and a monofunctional monomer having a dioxane or dioxolane moiety,
wherein the radiation curable inkjet ink contains the bifunctional urethane (meth)acrylate oligomer in an amount of greater than or equal to 20 parts by mass and the monofunctional monomer having a dioxane or dioxolane moiety in an amount of 10 to 80 parts by mass relative to 100 parts by mass of the polymerizable component.

2. The decorative film according to claim 1,
wherein the bifunctional urethane (meth)acrylate oligomer is a bifunctional aliphatic urethane acrylate oligomer.

3. The decorative film according to claim 1,
wherein the monofunctional monomer having a dioxane or dioxolane moiety has a (meth)acryloyl group.

4. The decorative film according to claim 1

wherein the printed layer has a two-dimensional design pattern,
the protective layer has a three-dimensionally shaped pattern, and
the two-dimensional design pattern is synchronized with the three -dimensionally shaped pattern.

5. The decorative film according to claim 1,
wherein the protective layer has at least partially a thickness of greater than or equal to 7 $\mu$m.

6. The decorative film according to claim 1,
wherein the elongation at break at 20°C is greater than or equal to 80%.

7. A radiation curable inkjet ink comprising:

a bifunctional urethane (meth)acrylate oligomer in an amount of greater than or equal to 20 parts by mass; and
a monofunctional monomer having a dioxane or dioxolane moiety in an amount of 10 to 80 parts by mass relative to 100 parts by mass of the polymerizable component,
wherein a cured product of the radiation curable inkjet ink has a glass transition temperature of 0 to 30°C.

8. The radiation curable inkjet ink according to claim 7,
wherein a viscosity at 60°C is lower than or equal to 14 mPa·s.

9. The radiation curable inkjet ink according to claim 7,
wherein the bifunctional urethane (meth)acrylate oligomer is a bifunctional aliphatic urethane acrylate oligomer.

10. The radiation curable inkjet ink according to claim 7, wherein the monofunctional monomer has a (meth)acryloyl group.

**Patentansprüche**

1. Eine Dekorfolie, aufweisend:

eine Basisfolienschicht;
eine gedruckte Schicht, die auf der Basisfolienschicht angeordnet ist; und
eine Schutzschicht, die auf der gedruckten Schicht angeordnet ist, die eine Textur aufweist,
wobei die Schutzschicht ein gehärtetes Produkt einer strahlungshärtbaren Tintenstrahltinte enthält, die durch Tintenstrahldrucken ausgebildet wird, wobei das gehärtete Produkt eine Glasübergangstemperatur von 0 bis 30 °C aufweist, wie gemäß dem in der Beschreibung offenbarten Verfahren bestimmt;
die Schlagfestigkeit der Dekorfolie bei 10 °C größer als oder gleich 4,52 Nm ist, wie gemäß dem in der Beschreibung offenbarten Verfahren bestimmt und
ein Rissbilden bei einem Biegefestigkeitstest gemäß JIS K 5600-5-1:1999 nicht auftritt,
wobei die strahlungshärtbare Tintenstrahltinte ein bifunktionelles Urethan(meth)acrylatoligomer und ein monofunktionelles Monomer, das eine Dioxan- oder eine Dioxolaneinheit aufweist, enthält,
wobei die strahlungshärtbare Tintenstrahltinte das bifunktionelle Urethan(meth)acrylatoligomer in einer Menge von größer als oder gleich 20 Massenteile enthält und das monofunktionelle Monomer eine Dioxan oder eine Dioxolaneinheit in einer Menge von 10 bis 80 Massenteile, bezogen auf 100 Massenteile der polymerisierbaren Komponente, aufweist.

2. Die Dekorfolie nach Anspruch 1,
wobei das bifunktionelle Urethan(meth)acrylatoligomer ein bifunktionelles aliphatisches Urethanacrylatoligomer ist.

3. Die Dekorfolie nach Anspruch 1,
wobei das monofunktionelle Monomer, das eine Dioxan- oder Dioxolaneinheit aufweist, eine (Meth)acryloylgruppe aufweist.

4. Die Dekorfolie nach Anspruch 1,

wobei die gedruckte Schicht ein zweidimensionales Designmuster aufweist,
die Schutzschicht ein dreidimensional geformtes Muster aufweist, und
das zweidimensionale Designmuster mit dem dreidimensional geformten Muster synchronisiert ist.

5. Die Dekorfolie nach Anspruch 1,
wobei die Schutzschicht mindestens teilweise eine Dicke von größer als oder gleich 7 μm aufweist.

6. Die Dekorfolie nach Anspruch 1,
wobei die Bruchdehnung bei 20 °C größer als oder gleich 80 % ist.

7. Eine strahlungshärtbare Tintenstrahltinte, umfassend:

ein bifunktionelles Urethan(meth)acrylatoligomer in einer Menge von größer als oder gleich 20 Massenteile; und
ein monofunktionelles Monomer, das eine Dioxan- oder Dioxolaneinheit in einer Menge von 10 bis 80 Massenteilen, bezogen auf 100 Massenteile der polymerisierbaren Komponente, aufweist,
wobei ein gehärtetes Produkt der strahlungshärtbaren Tintenstrahltinte eine Glasübergangstemperatur von 0 bis 30 °C aufweist.

8. Die strahlungshärtbare Tintenstrahltinte nach Anspruch 7,
wobei die Viskosität bei 60 °C kleiner als oder gleich 14 mPa-s ist.

9. Die strahlungshärtbare Tintenstrahltinte nach Anspruch 7,
wobei das bifunktionelle Urethan(meth)acrylatoligomer ein bifunktionelles aliphatisches Urethanacrylatoligomer ist.

10. Die strahlungshärtbare Tintenstrahltinte nach Anspruch 7, wobei das monofunktionelle Monomer eine (Meth)acryloylgruppe aufweist.


**Revendications**

1. Film décoratif comprenant :

une couche de film de base ;
une couche imprimée disposée sur la couche de film de base ; et
une couche protectrice disposée sur la couche imprimée et ayant une texture,
dans lequel la couche protectrice contient un produit durci d'une encre à jet d'encre durcissable par rayonnement qui est formée par impression à jet d'encre, ledit produit durci ayant une température de transition vitreuse allant de 0 à 30 °C, comme déterminé selon la méthode décrite dans la description ;
la résistance au choc du film décoratif à 10 °C est supérieure ou égale à 4,52 Nm, comme déterminé selon la méthode décrite dans la description, et
il n'y a pas de fissuration lors d'un essai de résistance à la flexion conformément à la norme JIS K 5600-5-1:1999, dans lequel l'encre à jet d'encre durcissable par rayonnement contient un oligomère uréthane (méth)acrylate bifonctionnel et un monomère monofonctionnel ayant une fraction dioxane ou dioxolane,
dans lequel l'encre à jet d'encre durcissable par rayonnement contient l'oligomère uréthane (méth)acrylate bifonctionnel en une quantité supérieure ou égale à 20 parties en masse et le monomère monofonctionnel ayant une fraction dioxane ou dioxolane en une quantité de 10 à 80 parties en masse par rapport à 100 parties en masse du composant polymérisable.

2. Film décoratif selon la revendication 1,
dans lequel l'oligomère uréthane (méth)acrylate bifonctionnel est un oligomère uréthane acrylate aliphatique bifonctionnel.

3. Film décoratif selon la revendication 1,
dans lequel le monomère monofonctionnel ayant une fraction dioxane ou dioxolane a un groupe (méth)acryloyle.

4. Film décoratif selon la revendication 1

dans lequel la couche imprimée a un motif à conception bidimensionnelle,
la couche protectrice a un motif de forme tridimensionnelle, et
le motif à conception bidimensionnelle est synchronisé avec le motif de forme tridimensionnelle.

5. Film décoratif selon la revendication 1,
dans lequel la couche protectrice a au moins partiellement une épaisseur supérieure ou égale à 7 $\mu$m.

6. Film décoratif selon la revendication 1,
dans lequel l'allongement à la rupture à 20 °C est supérieur ou égal à 80 %.

7. Encre à jet d'encre durcissable par rayonnement, comprenant :

un oligomère uréthane (méth)acrylate bifonctionnel en une quantité supérieure ou égale à 20 parties en masse ; et
un monomère monofonctionnel ayant une fraction dioxane ou dioxolane en une quantité de 10 à 80 parties en masse par rapport à 100 parties en masse du composant polymérisable,
dans lequel un produit durci de l'encre à jet d'encre durcissable par rayonnement a une température de transition vitreuse de 0 à 30 °C.

8. Encre à jet d'encre durcissable par rayonnement selon la revendication 7,
dans lequel une viscosité à 60 °C est inférieure ou égale à 14 mPa·s.

9. Encre à jet d'encre durcissable par rayonnement selon la revendication 7,
dans lequel l'oligomère uréthane (méth)acrylate bifonctionnel est un oligomère uréthane acrylate aliphatique bifonctionnel.

10. Encre à jet d'encre durcissable par rayonnement selon la revendication 7, dans laquelle le monomère monofonctionnel a un groupe (méth)acryloyle.

*FIG. 1*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014100811 A
- JP 2008080650 A
- JP 2007253506 A
- JP 2005067175 A
- US 2013222499 A1
- EP 3053739 A1

**Non-patent literature cited in the description**

- **FOX, T.G.** *Bull. Am. Phys. Soc.*, 1956, vol. 1, 123